# EUROPEAN PATENT APPLICATION

(11) **EP 2 200 147 A2**
(43) Date of publication of application: **23.06.2010**
(21) Application number: 09178451.2
(22) Date of filing: 09.12.2009
(51) Int. Cl.: H02J 7/00

(54) **Electricity storage controller with integrated electricity meter and methods for using same**

(30) Priority: 22.12.2008 US 341498
(71) Applicant: General Electric Company, Schenectady, NY 12345 (US)
(72) Inventor: Littrell, Nathan Bowman, Gardnerville, NV 89410 (US)
(74) Representative: Gray, Thomas

(57) **Abstract**

An electricity storage controller (104,206,414) for use with an electric vehicle (102,204), the controller configured to couple to at least an energy storage device (106,202,410) to receive electrical charging power from external to the vehicle is provided. The controller (104,206,414) programmed to transmit a request (112,214) for authorization for an electric charging transaction to a vehicle charging station (110,210,416), and receive a response (114,216) to the request from the vehicle charging station, wherein the response indicates one of an approval and a denial of the request.

## Description

### BACKGROUND OF THE INVENTION

The subject matter disclosed herein relates generally to the charging of a mobile electric load and more specifically, to the metering of electricity transferred to an electric vehicle, while recognizing the billing and revenue charges based on an amount of electric power transferred to the electric vehicle.

As electric vehicles and hybrid electric vehicles gain popularity, an associated need to accurately manage delivery of electrical energy to them has increased. Moreover, a need to recognize revenue due to the energy supplier has been created by the increased use of such vehicles.

At least some known electric delivery systems provide electric metering at a customer's premises. For example, some of such systems use an encoded magnetic strip that is applied to a card to transfer purchase information between a utility billing office and a utility metering and control device located at the customer's premises. A credit meter stored within the control device deducts a value associated with an amount of electricity consumed at the customer's premises. Some of such systems also enable the use of an emergency card that includes a similar encoded magnetic strip when the customer's account with the pre-purchased amount is exhausted. However, generally such systems do not provide for metering of electrical power transferred to a specific electric load and are thus not compatible for use with electric vehicles.

Moreover, at least some known electricity delivery systems enable mobile metering of electricity use. For example, some of such systems measure power delivered, while work is performed on a power network, using a mobile meter system (MMS) that receives high voltage inputs by connecting secondary side conductors and neutrals of a substation transformer to designated terminals on the MMS. The MMS then transforms the inputs using metering instruments and provides currents and voltages that can be metered and are accessible via an external metering cabinet. However, such mobile systems do not measure electricity delivery to electric vehicles nor use electrical metering included onboard of the electric vehicles.

Furthermore, at least some known systems provide remote monitoring of electricity consumption. For example, some of such systems provide remote monitoring via wireless communication between a communication device associated with an electricity meter and a site controller. More specifically, a communication device receives data from an associated electric meter that is related to an amount of electricity metered, and generates a transmitted message to the site controller using a wireless communication network. However, such systems are intended for use in metering electricity for a site and not for a specific mobile electric load, such as measuring electricity delivery to electric vehicles.

Accordingly, it is desirable to provide systems and methods for metering the amount of electrical power transferred to a mobile electric load, such as an electric vehicle, and billing a user of such electric vehicle or an account tied to the user or electric vehicle according to the amount of electrical power transferred to the electric vehicle.

### BRIEF DESCRIPTION OF THE INVENTION

This Brief Description is provided to introduce a selection of concepts in a simplified form that are further described below in the Detailed Description. This Brief Description is not intended to identify key features or essential features of the claimed subject matter, nor is it intended to be used as an aid in determining the scope of the claimed subject matter.

In one aspect, an electricity storage controller for use with an electric vehicle is coupled to at least an energy storage device to receive electrical charging power from external to the vehicle. Further, the controller is programmed to transmit a request for authorization for an electric charging transaction to a vehicle charging station and receive a response to the request from the vehicle charging station, wherein the response indicates one of an approval and a denial of the request.

In another aspect, a system for maintaining an energy level of an energy storage device for use with an electric vehicle includes at least one sensor for measuring a quantity of energy flowing into and from the energy storage device and an electricity storage controller, coupled to at least the energy storage device. The controller is programmed to transmit request for authorization for an electric charging transaction to a vehicle charging station and receive a response from the vehicle charging station based on the request, wherein the response indicates one of an approval and a denial of the request.

In yet another aspect, a method of maintaining an energy level of an energy storage device for use in an electric vehicle includes transmitting a request for authorization for an electric charging transaction to a vehicle charging station and receiving a response to the request from the vehicle charging station, wherein the response indicates one of an approval and a denial of the request. Upon receiving an approval, the method further includes receiving a quantity of electrical charging power and accompanying charging information from the vehicle charging station, delivering the quantity of electrical charging power to the energy storage device, measuring the quantity of electrical charging power received, comparing the measurement against the accompanying charging information, and transmitting the measurement and comparison results to the vehicle charging station for a billing determination.

### BRIEF DESCRIPTION OF THE DRAWINGS

There follows a detailed description of embodiments of the invention by way of example only with reference to the accompanying drawings, in which:
Figure 1 is a block diagram of an exemplary electricity delivery system for use with an electric vehicle;
Figure 2 is a block diagram of an exemplary system for use in maintaining a level of an energy storage device coupled to an electric vehicle;
Figure 3 is a flow chart illustrating an exemplary method of maintaining an energy level of an energy storage device coupled to an electric vehicle; and
Figure 4 illustrates a user interacting with an exemplary electric vehicle charging system and with a utility company business system to charge an electric vehicle.

### DETAILED DESCRIPTION OF THE INVENTION

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

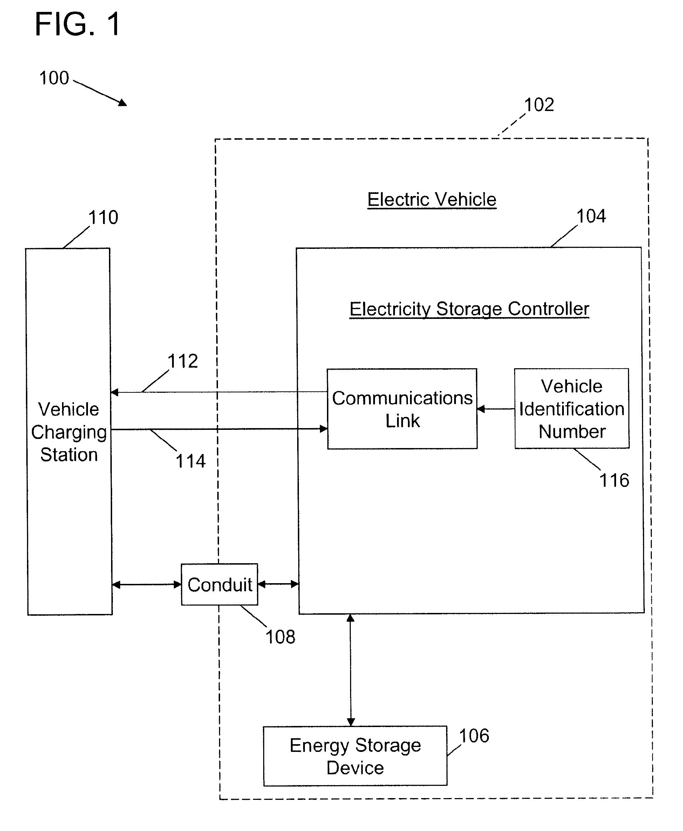

As used herein, the term "electric vehicle" includes any vehicle that includes one or more electric motors that are used for propulsion, such as an all-electric vehicle that uses only electricity, and/or a plug-in hybrid-electric vehicle that uses a gas powered engine in combination with batteries charged by an external power source or an engine and generator, to propel the vehicle. In addition, the term "electric vehicle" includes any suitable vehicle known to those skilled in the art and guided by the teachings herein provided that is capable of performing the functions described herein. Moreover, as used herein, the term "controller" and "processor" are interchangeable, and refer to a central processing unit, a microprocessor, a microcontroller, a microcomputer, a reduced instruction set circuit (RISC), an application specific integrated circuit (ASIC), a programmable logic controller, and any other circuit known to those skilled in the art and guided by the teachings herein provided that is capable of being used as described herein. Furthermore, as used herein, the term "software" and "firmware" are interchangeable, and includes any computer program stored in memory for execution by a controller 109 (shown in Figure 1), including random access memory (RAM), read-only memory (ROM), erasable programmable read-only memory (EPROM), electrically erasable programmable read-only memory (EEPROM), and non-volatile RAM (NVRAM). The above memory types are exemplary only, and are thus not limiting as to the types of memory usable for storage of a computer program.

Technical effects of the methods, systems, and controller described herein include at least one of transmitting a request for authorization for an electric charging transaction to a vehicle charging station, receiving a response to the request from the vehicle charging station, receiving a quantity of electrical charging power and accompanying charging information from the vehicle charging station, delivering the quantity of electrical charging power to the energy storage device, measuring the quantity of electrical charging power received, comparing the measurement against the accompanying charging information, transmitting the measurement and comparison results to the vehicle charging station for a billing determination, communicatively coupling the controller to the vehicle charging station, transmitting a unique vehicle identifier to the vehicle charging station, coupling the controller to at least one visual display that is coupled to at least one of the electric vehicle and the vehicle charging station, outputting at least one of the charging information, the measured electrical charging power information, and the comparison results to the at least one visual display, and monitoring a quantity of energy stored in the energy storage device to determine at least one of a present capacity of energy contained in the energy storage device, and a quantity of electrical charging power necessary to fully charge the energy storage device.

Figure 1 is a block diagram of an exemplary electricity delivery system 100 for use with an electric vehicle 102. In the exemplary embodiment, electricity storage controller 104 is coupled to an energy storage device 106 and to a conduit 108 that receives electrical charging power from a power source outside electric vehicle 102, such as a vehicle charging station 110, for use in charging electric vehicle 102. In the exemplary embodiment, vehicle charging station 110 is capable of providing electrical charging power simultaneously to one or more electric vehicles 102. In the exemplary embodiment, electricity storage controller 104 may transmit a request 112 for authorization for an electric charging transaction to vehicle charging station 110 and in response may receive a response 114 from vehicle charging station 110 indicating either approval or a denial of request 112. In one embodiment, request 112 includes a unique vehicle identification number 116 identifying electric vehicle 102.

In another embodiment, after receiving an approval in response 114 to request 112, electricity storage controller 104 receives a quantity of electrical charging power and charging information from vehicle charging station 110, and delivers the quantity of electrical charging power to energy storage device 106. In such an embodiment, electricity storage controller 104 measures the quantity of electrical charging power received from vehicle charging station, compares that measurement against the received charging information, and transmits the measurement and comparison results to vehicle charging station 110 for a billing determination. In the exemplary embodiment, electricity storage controller 104 is coupled to at least one visual display on one or more of vehicle charging station and electric vehicle 102 with which electricity storage controller displays at least one of the charging information, the measurements for electrical charging power, and/or the comparison, in human readable form, for viewing by the user. Such a display can be performed via any suitable display known to those skilled in the art and guided by the teachings herein provided, such as via a visual display screen coupled to vehicle charging station 110 or to electric vehicle 102.

In another embodiment, electricity storage controller 104 monitors the quantity of energy in energy storage device 106 to determine a present capacity of energy contained in energy storage device 106 and to determine a quantity of electrical charging power needed to fully charge energy storage device 106. The monitored historical information, in one embodiment, is stored on a data storage device (not shown in Figure 1) in electricity storage controller 104. Moreover, in one embodiment, electricity storage controller 104 includes the quantity determined when making the request 112 for authorization for electric charging transaction to vehicle charging station 110. The request, including the determined quantity, enables vehicle charging station 110 to transmit an exact cost of the electricity charging transaction to energy storage controller 106 in electric vehicle 102. Thus, based on the respective request, in the exemplary embodiment, vehicle charging station 110 requires prepayment for the electric charging transaction prior to initiating the electric charging process.

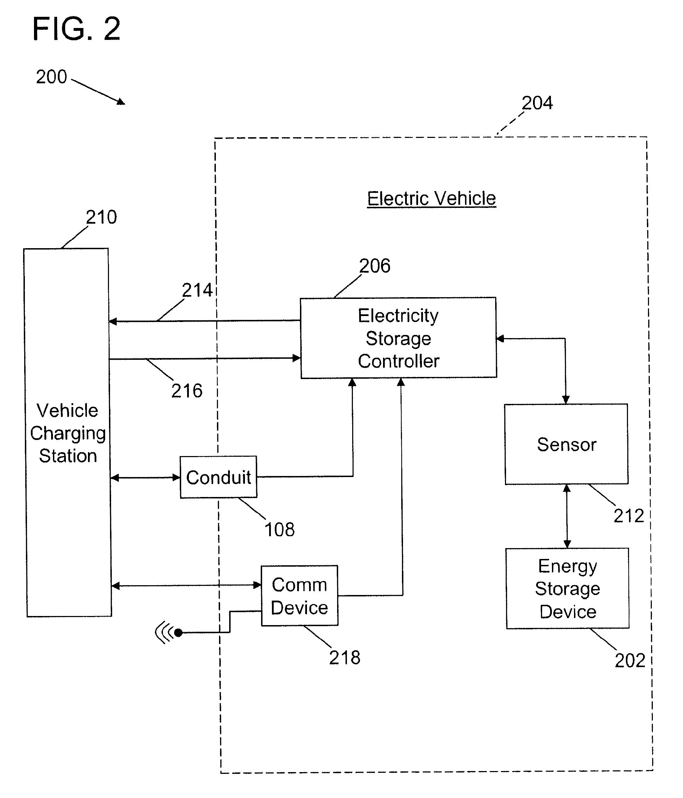

Figure 2 is an exemplary block diagram illustrating a system 200 for use in maintaining a level of an energy storage device 202 in an electric vehicle 204 while using an electricity storage controller 206, similar to that shown in Figure 1. In the exemplary embodiment, electric vehicle 204 includes an electricity storage controller 206 that is coupled to energy storage device 202 and to a conduit 208 that receives electrical charging power from a source external to electric vehicle 204, such as a vehicle charging station 210. In the exemplary embodiment, vehicle charging station 210 is electrically and/or communicatively coupled to one or more electric vehicles 204. A sensor 212 measures a quantity of energy flowing both into, and from energy storage device 202. In an exemplary embodiment, electricity storage controller 206 transmits a request 214 for an electric charging transaction to vehicle charging station 210, and receives a response 216 from vehicle charging station 210, indicating either approval or a denial of request 214. In some embodiments, request 214 includes a unique vehicle identification number 216 that is embedded within electric vehicle 204 and that is accessible by electricity storage controller 206. In the exemplary embodiment, system 200 also includes a communications device 218 that communicatively couples electricity storage controller 206 to other compatible devices, such as a utility company business system (not shown).

In one embodiment, after receiving an approval in response 216 to request 214, electricity storage controller 206 receives a quantity of electrical charging power, and accompanying charging information, from vehicle charging station 210. Controller 206 then delivers the quantity of electrical charging power to energy storage device 202. Moreover, electricity storage controller 206 also measures the quantity of electrical charging power received, compares the measured amount against the received charging information, and transmits the measurement and comparison results to vehicle charging station 210 for a billing determination. In the exemplary embodiment, electricity storage controller 206 is coupled to at least one visual display mounted to either vehicle charging station 210 and/or electric vehicle 204. Electricity storage controller 104 uses the display to display charging information, measurements for electrical charging power, and/or a comparison of the charging information to the measurements.

In another embodiment, the measurements from sensor 212 are stored on a data storage device. In one embodiment, electricity storage controller 206 may use the measurements from sensor 212 to determine the present capacity of energy contained in energy storage device 202 and to determine a quantity of electrical charging power necessary to fully charge energy storage device 202. Moreover, in such an embodiment, electricity storage controller 206 includes the quantity determined when making a request 214 for authorization for the electric charging transaction to vehicle charging station 210. The request, including the determined quantity, enables vehicle charging station 210 to transmit an exact cost of the electricity charging transaction to electricity storage controller 206 in electric vehicle 204. Thus, based on the respective request, in the exemplary embodiment, vehicle charging station 210 requires prepayment for the electric charging transaction prior to initiating the electric charging process.

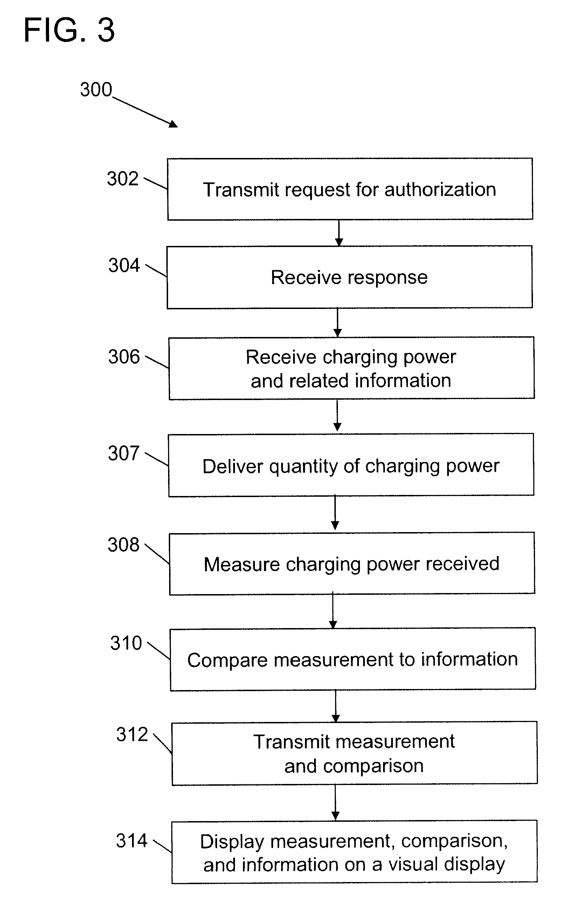

Figure 3 is a flow chart illustrating an exemplary method 300 of maintaining an energy level of an energy storage device in an electric vehicle, such as are both shown in Figure 2. In the exemplary embodiment, a request for authorization for an electric charging transaction is transmitted 302 to a vehicle charging station. The response to the request is received 304 from vehicle charging station. The response received 304 indicates either an approval or a denial of the request. A quantity of electrical charging power, including accompanying charging information, is received 306 from vehicle charging station and the quantity of electrical charging power is delivered 307 through to the energy storage device. The received quantity of electrical charging power is measured 308, and the measurement is then compared 310 to the charging information. The measurement and comparison are transmitted 312 to vehicle charging station for a billing determination, and the measurement, comparison, and charging information are then displayed 314 on at least one visual display. Further, in other exemplary embodiments, displaying 314 is performed using at least one display located on vehicle charging station, a display located inside electric vehicle, and/or a display viewable by an operator of vehicle charging station.

In the exemplary embodiment, the request also includes a unique vehicle identifier that is transmitted 302 to the vehicle charging station. In such an embodiment, the unique vehicle identifier is used by the vehicle charging station to authorize the request transmitted 302 to authorize the electric charging transaction from one or more suppliers of electrical charging power. Further, in one exemplary embodiment, the unique vehicle identifier is predetermined by a manufacturer of electric vehicle. In alternative embodiments, the unique vehicle identifier represents at least one of an electrical charging power supplier account number, a pre-paid stored value account number, a credit account number, a standard vehicle identification number (VIN), and/or any suitable identifying number of a type known to those skilled in the art and guided by the teachings herein provided that is capable of being used as described herein. In another embodiment, the unique vehicle identifier is only transmitted 302 upon authorization by the user of electric vehicle. Such an embodiment restricts unauthorized access to the unique vehicle identifier. In yet another alternative embodiment, a new unique vehicle identifier is generated for each request for authorization for an electric charging transaction.

In the exemplary embodiment, at least one of transmitting 302, receiving 304, receiving 306, and transmitting 311, are communicated via wireless communication and/or wired communication, such as, for example, a wireless fidelity, broadband over power lines, RFID, and/or any suitable communications method known to those skilled in the art that enables the method 300 to be performed as described herein.

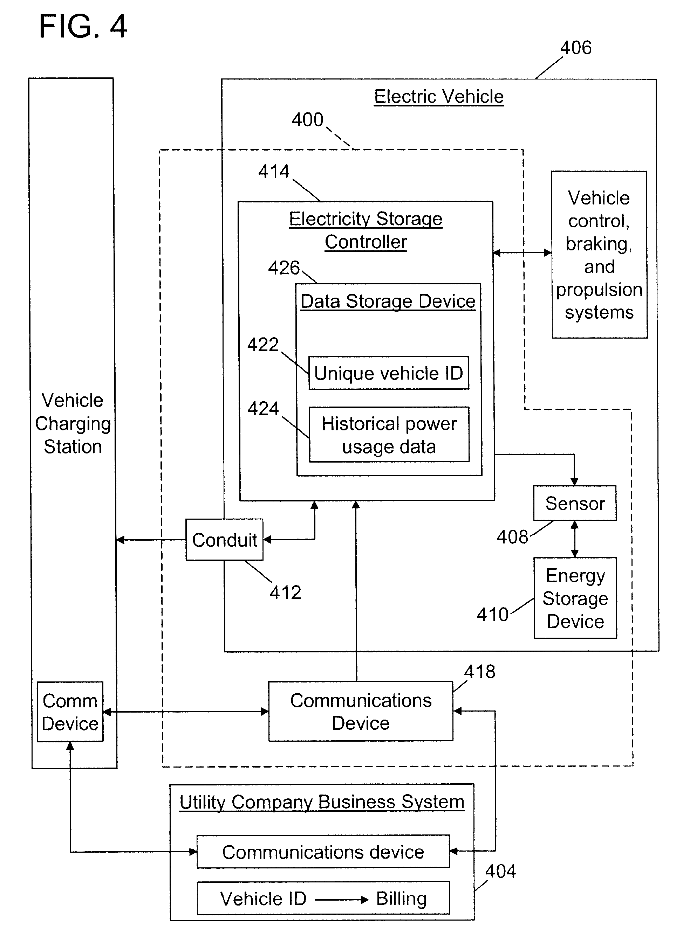

Figure 4 illustrates a user 402 interacting with an exemplary electric vehicle charging system 400 and with an exemplary utility company business system 404 to charge an electric vehicle 406 and to bill user 402 for an electric charging transaction. In the exemplary embodiment, electric vehicle charging system 400 includes at least one sensor 408 for use in measuring a quantity of energy flowing into and from an energy storage device 410, a conduit 412 that receives electrical charging power from external to electric vehicle 406, and an electricity storage controller 414. Electricity storage controller 414 is coupled to at least energy storage device 410 and to conduit 412, such that electricity storage controller 414 may transmit a request for authorization for an electric charging transaction to a vehicle charging station 416, and may receive a response from vehicle charging station 416 indicating either an approval or a denial of the request.

In the exemplary embodiment, electric vehicle charging system 400 includes a communications device 418 that communicatively couples at least part of system 400 to other compatible devices. For example, device 418 communicatively couples electricity storage controller 414 to vehicle charging station 416. Device 418 also enables a unique vehicle identifier 422 to be included with the request for authorization transmitted to vehicle charging station 416. In the exemplary embodiment, utility company billing system 404 uses unique vehicle identifier 422 to authorize the electrical charging transaction and to facilitate billing user 402 for the transaction. In another embodiment, system 400 receives a quantity of electrical charging power and accompanying charging information, and in response, delivers the quantity of electrical charging power to energy storage device 410, measures the quantity of power delivered to energy storage device 410 through sensor 408, compares the measurement of the amount delivered to the accompanying charging information, and transmits the measurement and comparison results to vehicle charging station 416 for a billing determination. In yet another embodiment, electricity storage controller 414 stores historical power usage data 424 in data storage device 426 and uses historical power usage data 424 to determine a present capacity of energy contained in energy storage device 410 and/or a quantity of electrical charging power necessary to fully charge energy storage device 410.

In an alternative embodiment, the request for authorization for an electric charging transaction also includes a request for delivery of a quantity of electrical charging power necessary to fully charge energy storage device 410. In another embodiment, electricity storage controller 414 is coupled to at least one visual display coupled to electric vehicle 406 and/or to vehicle charging station 416, such that electricity storage controller 414 may output for display, the accompanying charging information and/or the measurement and comparison results.

Described in detail herein are exemplary embodiments of methods, systems, and controllers that facilitate metering the electricity transferred to a vehicle when charging the vehicle, such as an electric vehicle. In addition, the electric vehicle is capable of identifying itself to the vehicle charging station, enabling the station to provide multiple payment or billing arrangements for charging the electric vehicle. Moreover, the embodiments described herein are capable of auditing the payment amount that may be required by the vehicle charging station by comparing the information provided by the station to the measurements obtained by the electric vehicle during the electric charging process. Furthermore, the embodiments enable an electric car to track its energy usage to determine an amount of electrical charging power needed for the electric car to be fully charged, similar in function to a gas gauge.

Exemplary embodiments of an electricity storage controller including an integrated electricity meter are described above in detail. The invention is not limited to the specific embodiments described herein. For example, the controller described herein may also be used in a hybrid-vehicle that uses a combination of electricity and engine provided power for movement, and thus is not limited to practice with only the methods and systems as described herein. Rather, the exemplary embodiment can be implemented and utilized in connection with many other electricity storage applications.

As will be appreciated based on the foregoing specification, the above described embodiments of the disclosure may be implemented using computer programming or engineering techniques including computer software, firmware, hardware or any combination or subset thereof, wherein the technical effect is to charge an energy storage device in an electric vehicle, measure the charging power transferred to the energy storage device, and provide a method of billing for the charging power. Any such resulting program, having computer-readable code means, may be embodied or provided within one or more computer-readable media, thereby making a computer program product, i.e., an article of manufacture, according to the discussed embodiments of the disclosure. The computer readable media may be, for example, but is not limited to, a fixed (hard) drive, diskette, optical disk, magnetic tape, semiconductor memory such as ROM, and/or any transmitting/receiving medium such as the Internet other communications network or link. The article of manufacture containing the computer code may be made and/or used by executing the code directly from one medium, by copying the code from one medium to another medium, or by transmitting the code over a network.

The methods, systems, and controllers described herein are not limited to the specific embodiments described herein. For example, components of each system and/or steps of each method may be used and/or practiced independently and separately from other components and/or steps described herein. In addition, each component and/or step may also be used and/or practiced with other assembly packages and methods.

## Claims

1. An electricity storage controller (104,206,414) for use with an electric vehicle (102,204), said controller configured to couple to at least an energy storage device (106,202,410) to receive electrical charging power from external to the vehicle, said controller programmed to:
transmit a request (112,214) for authorization for an electric charging transaction to a vehicle charging station (110,210,416); and
receive a response (114,216) to the request from the vehicle charging station, wherein the response indicates one of an approval and a denial of the request.

2. An electricity storage controller (104,206,414) in accordance with claim 1, wherein said controller is further programmed to:
communicatively couple said controller to the vehicle charging station (110,210,416); and
transmit a request that includes a unique vehicle identifier (422).

3. An electricity storage controller (104,206,414) in accordance with claim 1 or 2, wherein said controller is further programmed to, upon receiving an approval in response (114,216) to the request:
receive a quantity of electrical charging power and accompanying charging information from the vehicle charging station (110,210,416);
deliver the quantity of electrical charging power through said controller to the energy storage device;
measure the quantity of electrical charging power received;
compare the measurement against the accompanying charging information; and
send the measurement and comparison results to the vehicle charging station for a billing determination.

4. An electricity storage controller (104,206,414) in accordance with any of the preceding claims, wherein said controller is coupled to at least one visual display, said at least one visual display is attached to at least one of the electric vehicle (102,204) and the vehicle charging station (110,210,416), said controller is further programmed to output to said at least one display at least one of the accompanying charging information, the measured electrical charging power information, and the comparison results.

5. An electricity storage controller (104,206,414) in accordance with any of the preceding claims, wherein said controller is further programmed to monitor a quantity of energy stored in the energy storage device (106,202,410) to determine at least one of a present capacity of energy contained in the energy storage device, and a quantity of electrical charging power necessary to fully charge the energy storage device.

6. An electricity storage controller (104,206,414) in accordance with claim 5, wherein the request for authorization includes the quantity of electrical charging power necessary to fully charge the energy storage device (106,202,410).

7. An electricity storage controller (104,206,414) in accordance with claim 5 or 6, wherein said controller is further programmed to store historical data of energy use of the electric vehicle (102,204) in a data storage device (426).

8. A system (200,400) for maintaining an energy level of an energy storage device for use with an electric vehicle (102,204), said system comprising:
at least one sensor (212) for measuring a quantity of energy flowing into and from the energy storage device (106,202,410); and
an electricity storage controller (104,206,414), coupled to at least the energy storage device, said controller programmed to:
transmit request for authorization for an electric charging transaction to a vehicle charging station (110,210,416); and
receive a response (114,214) from the vehicle charging station based on the request (112,216), wherein the response indicates one of an approval and a denial of the request.

9. A system (200,400) in accordance with claim 8, wherein said system further comprises a communications device (218) configured to communicatively couple said electricity storage controller (104,206,414) to the vehicle charging station (110,210,416) and transmit a unique vehicle identifier (422) to the vehicle charging station.

10. A system (200,400) in accordance with claim 8 or 9, wherein said controller (104,206,414) is further programmed to, upon receiving approval of the request (112,214):
receive a quantity of electrical charging power and accompanying charging information from the vehicle charging station (110,210,416);
deliver the quantity of electrical charging power to the energy storage device;
measure the quantity of electrical charging power received;
compare the measurement against the accompanying charging information; and
send the measurement and comparison results to the vehicle charging station for a billing determination.

11. A system in accordance with any of claims 8 to 10, wherein said controller is coupled to at least one visual display, said at least one visual display is attached to at least one of the electric vehicle and the vehicle charging station, said controller is further programmed to output to at least one display at least one of the accompanying charging information, the measured electrical charging power information, and the comparison results.

12. A system in accordance with any of claims 8 to 11, wherein said controller is further programmed to monitor a quantity of energy stored in the energy storage device to determine at least one of a present capacity of energy contained in the energy storage device, and a quantity of electrical charging power necessary to fully charge the energy storage device.

13. A system in accordance with claim 12, wherein the request for authorization includes the quantity of electrical charging power necessary to fully charge the energy storage device.

14. A system in accordance with claim 12 or 13, wherein said controller is further programmed to store historical data of energy use of the electric vehicle in a data storage device.

15. A method of maintaining an energy level of an energy storage device for use in an electric vehicle, said method comprising:
transmitting a request for authorization for an electric charging transaction to a vehicle charging station;
receiving a response to the request from the vehicle charging station, wherein the response indicates one of an approval and a denial of the request; and
upon receiving an approval, said method further comprises:
receiving a quantity of electrical charging power and accompanying charging information from the vehicle charging station;
delivering the quantity of electrical charging power to the energy storage device;
measuring the quantity of electrical charging power received;
comparing the measurement against the accompanying charging information; and
transmitting the measurement and comparison results to the vehicle charging station for a billing determination.
